(19) Europäisches Patentamt
European Patent Office
Office européen des brevets

(11) **EP 3 969 336 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **20728974.5**

(22) Anmeldetag: **14.05.2020**

(51) Internationale Patentklassifikation (IPC):
**B60T 8/172** *(2006.01)* **B60T 8/1755** *(2006.01)*
**B60W 40/103** *(2012.01)*

(52) Gemeinsame Patentklassifikation (CPC):
**B60T 8/172; B60T 8/17552; B60W 40/103;**
B60T 2230/02; B60W 2520/10; B60W 2520/14;
B60W 2520/20; B60W 2540/18; B60W 2720/20

(86) Internationale Anmeldenummer:
**PCT/EP2020/063399**

(87) Internationale Veröffentlichungsnummer:
**WO 2020/229573 (19.11.2020 Gazette 2020/47)**

(54) **VERFAHREN ZUR BESTIMMUNG EINES SCHWIMMWINKELS WÄHREND EINER KURVENFAHRT EINES KRAFTWAGENS, FAHRERASSISTENZSYSTEM ZUR DURCHFÜHRUNG DES VERFAHRENS SOWIE KRAFTWAGEN**

METHOD FOR DETERMINING A SIDE SLIP ANGLE DURING CORNERING OF A MOTOR VEHICLE, DRIVER ASSISTANCE SYSTEM FOR CARRYING OUT THE METHOD, AND MOTOR VEHICLE

PROCÉDÉ DE DÉTERMINATION D'UN ANGLE DE DÉRIVE PENDANT LA NÉGOCIATION D'UN VIRAGE D'UN VÉHICULE À MOTEUR, SYSTÈME D'AIDE À LA CONDUITE POUR METTRE EN OEUVRE LE PROCÉDÉ ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2019 DE 102019112900**

(43) Veröffentlichungstag der Anmeldung:
**23.03.2022 Patentblatt 2022/12**

(73) Patentinhaber: **ZF CV Systems Europe BV**
**1170 Brussels (BE)**

(72) Erfinder:
• **MUNKO, Tobias**
**30459 Hannover (DE)**

• **BEHRENS, Timo Pascal**
**30926 Seelze (DE)**
• **OLDEMEYER, Bernd**
**30851 Langenhagen (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
EP-A2- 0 970 876    EP-A2- 1 811 308
DE-A1-102013 224 305    FR-A1- 3 044 994
US-A1- 2017 038 476

**Beschreibung**

Die Erfindung betrifft ein Verfahren zur Bestimmung eines Schwimmwinkels während einer Kurvenfahrt eines Kraftwagens gemäß dem Oberbegriff des Anspruchs 1. Die Erfindung betrifft außerdem gemäß Anspruch 7 ein Fahrerassistenzsystem zur Durchführung des Verfahrens sowie gemäß Anspruch 11 einen Kraftwagen mit einem solchen Fahrerassistenzsystem.

In Kurvenfahrten eines Kraftwagens bewegt sich dessen Schwerpunkt nicht entlang der Fahrzeuglängsachse. Der Winkel zwischen der Bewegungsrichtung des Kraftwagens im Schwerpunkt und der Fahrzeuglängsachse bei der Kurvenfahrt wird Schwimmwinkel genannt. Er setzt sich aus einem geometrischen Anteil, der nur von der Position des Schwerpunkts im Fahrzeug und dem Kurvenradius abhängt, sowie dem Schräglaufwinkel der Hinterachse zusammen.

Der Schwimmwinkel kann in vielen Fahrsituationen als Maß für die Fahrstabilität des Kraftwagens herangezogen und Fahrerassistenzsystemen bereitgestellt werden, beispielsweise für Fahrdynamikregelungen. Insbesondere für Lastkraftwagen sind viele Fahrerassistenzfunktionen vorgesehen, deren Effizienz durch Kenntnis des aktuellen Schwimmwinkels verbessert ist. Der Schwimmwinkel kann allerdings nur mit sehr großem Aufwand gemessen werden und wird üblicherweise durch Schätzung bestimmt. Oft werden dabei leichter messbare oder bereits bekannte Eingangsgrößen erfasst und über ein mathematisches Fahrzeugmodell verknüpft.

DE 10 2006 009 682 A1 offenbart ein Verfahren zum Bestimmen des Fahrzustands eines zweispurigen Fahrzeugs durch Schätzung des Schwimmwinkels über ein mathematisches Modell aufgrund aktuell am Fahrzeug gemessener Werte sowie mittels eines auf diesem Modell basierenden Beobachteransatzes. Bei dem bekannten Verfahren werden als am Fahrzeug gemessene Werte die Reifenkräfte oder Radkräfte zumindest in Fahrzeug-Querrichtung verwendet sowie ferner zumindest ein Lenkwinkel für die beiden Räder der Vorderachse. Außerdem wird eine Information über die Lage des Schwerpunkts des Fahrzeugs zwischen einer Vorderachse und einer Hinterachse berücksichtigt, Weiterhin werden zum Abgleich des Beobachteransatzes die gemessene Gierrate oder Gierbeschleunigung sowie die Längsgeschwindigkeit des Fahrzeugs herangezogen.

Die Reifenseitenkräfte, deren Kenntnis das bekannte Verfahren benötigt, sind jedoch im Betrieb des Fahrzeugs nicht oder nur äußerst aufwändig zu messen.

DE 10 2010 050 278 A1 offenbart ein Verfahren zum Schätzen eines Schwimmwinkels, bei dem Informationen zu Eingangsgrößen über die Annahmen des linearen Einspurmodells verknüpft werden, dessen Zustandsgröße schließlich der Schwimmwinkel ist. Als Eingangsgrößen werden der Lenkwinkel und die Geschwindigkeit des Fahrzeugs gemessen. Wenigstens eine weitere Größe, nämlich die Gierbeschleunigung und/oder die Querbeschleunigung werden anhand des mathematischen Modells auf Grundlage der Messwerte berechnet. Dabei werden bei der Anwendung des Einspurmodells auch Größen berücksichtigt, welche durch die Lage des Schwerpunkts des Kraftfahrzeugs zwischen einer Vorderachse und einer Hinterachse bestimmt sind. Für die Schätzung des Schwimmwinkels auf der Grundlage des Einspurmodells benötigt das bekannte Verfahren einen neuen Wert eines nicht gemessenen Parameters, nämlich die Schräglaufsteifigkeit an zumindest einem Rad. Die Bestimmung der Schräglaufsteifigkeit realisiert das bekannte Verfahren über einen Beobachteransatz unter Verwendung eines Kalman-Filters. Der Schwimmwinkel wird schließlich mit Hilfe des linearen Einspurmodells bestimmt, und zwar unter Zuhilfenahme der jeweils aktuellen Werte für die Schräglaufsteifigkeiten.

EP 0 970 876 A2 zeigt ein Radschlupfwinkelerfassungssystem für ein Kraftfahrzeug. Ein Fahrzustand eines Fahrzeugs wird hier durch eine Fahrzustandserfassungsvorrichtung erfasst. Ein Querschlupfwinkel einer Fahrzeugkarosserie wird als erster Querschlupfwinkel in einer ersten Querschlupfwinkel-Berechnungsvorrichtung berechnet, indem ein differenzierter Wert des Querschlupfwinkels integriert wird, der auf der Grundlage eines nichtlinearen Vierradfahrzeugs bestimmt wird Bewegungsmodell. Ein Querschlupfwinkel der Fahrzeugkarosserie wird als ein zweiter Querschlupfwinkel in einer zweiten Querschlupfwinkel-Berechnungsvorrichtung durch eine Berechnung in einem linearen Bewegungsmodell eines Zweiradfahrzeugs berechnet. Einer der ersten und zweiten Seitenschlupfwinkel wird alternativ in einer Auswahlvorrichtung in Übereinstimmung mit dem Fahrzustand ausgewählt, der durch die Fahrzustandserfassungsvorrichtung erfasst wird, so dass der zweite Seitenschlupfwinkel ausgewählt wird, wenn der Fahrzustand vorliegt, die Erfassungsvorrichtung einen Zustand erfasst, in dem das Fahrzeug mit niedriger Geschwindigkeit geradeaus fährt. Ein Schlupfwinkel jedes der Räder wird durch eine Schlupfwinkel-Berechnungsvorrichtung basierend auf dem Querschlupfwinkel in der Auswahlvorrichtung berechnet.

Aufgabe der Erfindung ist es demgemäß, die Bestimmung des Schwimmwinkels während der Kurvenfahrt eines Kraftwagens, insbesondere eines Lastkraftwagens, zu vereinfachen.

Die Aufgabe wird erfindungsgemäß durch ein Verfahren zur Bestimmung eines Schwimmwinkels während der Kurvenfahrt eines Kraftwagens mit den Merkmalen des Anspruchs 1 gelöst. Die Aufgabe wird außerdem durch ein Fahrerassistenzsystem zur Durchführung des Verfahrens mit den Merkmalen des Anspruchs 6 sowie gemäß Anspruch 10 durch einen Kraftwagen mit einem solchen Fahrerassistenzsystem gelöst.

Gemäß der Erfindung wird der Schwimmwinkel im Fall einer stabilen Kurvenfahrt des Kraftwagens unter der Annahme bestimmt, dass die Differenz zwischen dem Schwimmwinkel und dem Schwimmwinkel unter Ackermann- Bedingungen, dem sogenannten Ackermannschwimmwinkel, proportional zu der Differenz zwischen dem Ackermannwinkel und dem Lenkwinkel ist. Als stabile Kurvenfahrt wird eine Kurvenfahrt verstanden, bei der die ermittelten Fahrdynamikgrößen innerhalb eines Bereichs vorgegebener Stabilitätskriterien liegen, deren Überschreiten einen Eingriff in die Fahrstabilität indizieren kann. Eine stabile Kurvenfahrt kann beispielsweise eine stationäre Kreisfahrt oder eine konstante Kreisfahrt sein, wobei Änderungen der Werte des Lenkwinkels und/oder der Längsgeschwindigkeit und/oder der Querbeschleunigung unter Berücksichtigung des Kurvenradius unter Berücksichtigung der vorgegebenen Stabilitätskriterien einem dynamisch stabilen Fahrzustand genügen und quasistationär behandelt werden können. Die erfindungsgemäße Annahme entspricht der folgenden Gleichung:

$$(beta - beta0) \sim (deltaA - delta) \qquad (1)$$

mit    beta    Schwimmwinkel
beta0    Ackermannschwimmwinkel
delta    Lenkwinkel
deltaA    Ackermannwinkel

Der Ackermannwinkel ist dabei der Winkel, der von den Polstrahlen vom Momentanpol der Kurvenfahrt zur Vorderachse und zur Hinterachse eingeschlossen wird. Unter dem Ackermannschwimmwinkel wird derjenige Schwimmwinkel verstanden, der sich theoretisch bei schlupffreier Fahrt der gleichen Kurve einstellt. Aus der Beziehung des gemessenen Lenkwinkels und des Ackermannwinkels über die Proportionalitätsbeziehung vom Ackermannschwimmwinkel wird auf den tatsächlichen Schwimmwinkel geschlossen. Unter Berücksichtigung der linearen Proportionalität ergibt sich folgende Beziehung der Differenz des Schwimmwinkels und des Ackermannschwimmwinkel gegenüber dem Ackermannschwimmwinkel sowie der Differenz des Ackermannwinkels und des Lenkwinkels gegenüber dem Ackermannwinkel, aus der die gesuchte Information über den Schwimmwinkel hergeleitet wird:

$$(beta-beta0)/beta0 = (deltaA-delta)/deltaA$$
$$=> beta = beta0 + (deltaA-delta)*beta0/deltaA \qquad (2)$$

Das mathematische Modell, welches das Fahrerassistenzsystem der Bestimmung des Schwimmwinkels zugrunde legt, umfasst gemäß der Erfindung die vorstehende Annahme gemäß Gleichung 2.

Die Erfindung hat dabei erkannt, dass sowohl der Ackermannwinkel als auch der Ackermannschwimmwinkel theoretisch schlupffreie Fahrsituationen sind und mit Kenntnis des Radstands und der Schwerpunktlage allein mit dem gemessenen Lenkwinkel und der aktuellen Kurvenfahrtbewegungsgröße des Kraftwagens bestimmt werden können.

Die Erfindung zeigt damit einen Weg auf, den Schwimmwinkel bei stabiler Kurvenfahrt des Kraftwagens den Schwimmwinkel mit hinreichender Präzision allein auf der Grundlage der aktuell gemessenen Eingangsgrößen zu bestimmen, das heißt der Fahrzeuggeschwindigkeit des Kraftwagens, des Lenkwinkels sowie einer Kurvenfahrtbewegungsgröße des Kraftwagens.

Der tatsächliche Lenkwinkel wird beispielsweise durch einen Lenkwinkelsensor an der Lenksäule ermittelt. Als Kurvenfahrtbewegungsgröße wird bevorzugt diejenige Größe herangezogen, welche dem Fahrerassistenzsystem bereits für andere Funktionen bereitgestellt ist. Dabei kann beispielsweise die Querbeschleunigung als geeignete Kurvenfahrtbewegungsgröße durch einen ESC-Sensor ermittelt werden. Die Information zur Fahrzeuggeschwindigkeit des Kraftwagens wird über Messwerte von Drehzahlsensoren, etwa Polradsensoren, an den Rädern bereitgestellt.

Insbesondere ist bei dem erfindungsgemäßen Ansatz keine Ermittlung der Schräglaufsteifigkeiten erforderlich. Dem liegt die praktische Annahme zugrunde, dass der theoretisch betrachtete Fahrzustand nicht vollständig schlupffrei ist, sondern nur sehr nahe an den Ackermann-Bedingungen liegen soll. Damit wird für die erfindungsgemäße Bestimmung des Schwimmwinkels unterstellt, dass die Gleichungen des linearen Einspurmodells ihre Gültigkeit haben, wodurch auch in diesem theoretischen Fahrzustand das Verhältnis der Schräglaufsteifigkeiten der Vorder- und Hinterachse einen Einfluss auf Lenk- und Schwimmwinkel haben. Da diese aber sehr nahe an Lenk- und Schwimmwinkel bei völlig schlupffreier Fahrt liegen, vernachlässigt der erfindungsgemäße Ansatz diese Abweichung bewusst.

Insbesondere bedarf es bei der erfindungsgemäßen Bestimmung des Schwimmwinkels während einer stabilen Kurvenfahrt keiner gesonderten Berücksichtigung des Einflusses der Schräglaufsteifigkeiten. Durch Kenntnis des jeweiligen Radstands und der Schwerpunktlage in Fahrzeuglängsrichtung können so der Lenkwinkel und der Schwimmwinkel aus den kinematischen Beziehungen bei Ackermann-Bedingungen berechnet werden, die theoretisch zum Befahren der vorliegenden Kurve bei unendlich langsamer (und damit schlupffreier) Fahrt erforderlich wären. Die Erfindung hat nämlich erkannt, dass das Verhältnis der Schräglaufsteifigkeiten konstant über den betrachteten Bereich ist und daher den gleichen Einfluss auf Zähler und Nenner in der Proportionalitätsbeziehung hat, so dass die Kenntnis des genauen Schräglaufsteifigkeitsverhältnisses nicht erforderlich ist. Anders ausgedrückt sind Lenkwinkel und Schwimmwinkel unter Ackermann-Bedingungen gewissermaßen der Nullpunkt der Betrachtung der Kurvenfahrt, von dem sich der Kraftwagen mit zunehmender Geschwindigkeit immer weiter entfernt. Durch die Annahme der Linearität der Reifeneigenschaften im Gültigkeitsbereich des linearen Einspurmodells kann in diesem Bereich immer ausgehend von diesem Nullpunkt vom tatsächlich vorliegenden Lenkwinkel auf den tatsächlich vorliegenden Schwimmwinkel geschlossen werden.

Die Bestimmung der Lage des Schwerpunkts zwischen den Achsen erfolgt in einer elektronischen Ausführungsform der Erfindung über eine elektronische Auswertung von Messwerten, beispielsweise von Achslastsensoren. Die Information über den Radstand des Kraftwagens liegt konstruktiv fest und steht für die Schwerpunktbestimmung zur Verfügung.

Der gesuchte Schwimmwinkel lässt sich in einer einfach zu verarbeitenden Beziehung als Differenz eines ersten Quotienten aus zweifacher Hinterachsentfernung des Schwerpunkts von der Hinterachse gegenüber dem Kurvenradius, sowie eines zweiten Quotienten des Produkts von Lenkwinkel und Hinterachsentfernung gegenüber dem Radstand zwischen der Vorderachse und der Hinterachse bestimmt werden.

Da der Kurvenradius im linearen Einspurmodell als Verhältnis der Fahrzeuggeschwindigkeit zur Kurvenfahrtbewegungsgröße bestimmt ist, lässt sich in einer vorteilhaften Ausführungsform der Erfindung, bei der als Kurvenfahrtbewegungsgröße die Giergeschwindigkeit ermittelt oder gemessen wird, folgende Gleichung angeben:

$$\text{beta} = 2 \cdot Lh \cdot \text{psipunkt}/v - \text{delta} \cdot Lh/L \quad .$$

| mit | Lh | Hinterachsentfernung |
|---|---|---|
| | L | Radstand |
| | psipunkt | Giergeschwindigkeit |
| | v | Fahrzeuggeschwindigkeit |

Wird alternativ zur Giergeschwindigkeit als Kurvenfahrtbewegungsgröße eine Querbeschleunigung a ermittelt oder gemessen, so ergibt sich folgende Gleichung zur Bestimmung des gesuchten Schwimmwinkels:

$$\text{beta} = 2 \cdot Lh \cdot a/(v^{**}2) - \text{delta} \cdot Lh/L$$

mit a Querbeschleunigung

Das Fahrerassistenzsystem ist in einer vorteilhaften Ausführungsform der Erfindung zur Bestimmung von aktiven Lenkeingriffen unter Berücksichtigung des Schwimmwinkels ausgebildet. Dabei können durch den erfindungsgemäßen Ansatz zur Bestimmung des Schwimmwinkels bei stationärer Kurvenfahrt sehr schnell und präzise Informationen über die Fahrstabilität bereitgestellt und entsprechende Eingriffe berechnet werden.

In einer weiteren bevorzugten Ausführungsform ist das Fahrerassistenzsystem zur Bestimmung von Trajektorien unter Berücksichtigung des Schwimmwinkels ausgebildet.

Die laufend aktualisierbaren Informationen zum Schwimmwinkel lassen genaue Rückschlüsse auf Über- oder Untersteuertendenzen des Kraftwagens zu. Vor diesem Hintergrund ist das erfindungsgemäße Fahrerassistenzsystem zur Detektion von Über- oder Untersteuertendenzen unter Berücksichtigung des Schwimmwinkels ausgebildet.

Wenn keine stabile Kurvenfahrt gegeben ist, wird der Schwimmwinkel nach einem an sich bekannten Verfahren mit Beobachtersystem oder Integration bestimmt. Vorzugsweise wird dann der Schwimmwinkel bestimmt durch Integration der Differenz zwischen gemessener Giergeschwindigkeit und einem Wert der Giergeschwindigkeit, welcher aus der Querbeschleunigung hergeleitet wird. Ausführungsbeispiele der Erfindung sind nachstehend anhand der Zeichnung näher erläutert. Es zeigen:

Fig. 1 einen schematisch dargestellten Kraftwagen mit einem Ausführungsbeispiel eines Fahrerassistenzsystem gemäß der Erfindung,

Fig. 2 ein Flussschaubild eines Ausführungsbeispiels eines Verfahrens zur Bestimmung eines Schwimmwinkels während der Kurvenfahrt des Kraftwagens;

Fig. 3 eine Darstellung der geometrischen Beziehungen am Kraftwagen gemäß dem Einspurmodell;

Fig. 4 eine Darstellung der geometrischen Beziehungen unter Ackermann-Bedingungen gemäß dem Einspurmodell;

Fig.5 eine grafische Darstellung der Beziehung des Lenkwinkels gegenüber dem Schwimmwinkel bei stationärer Kurvenfahrt.

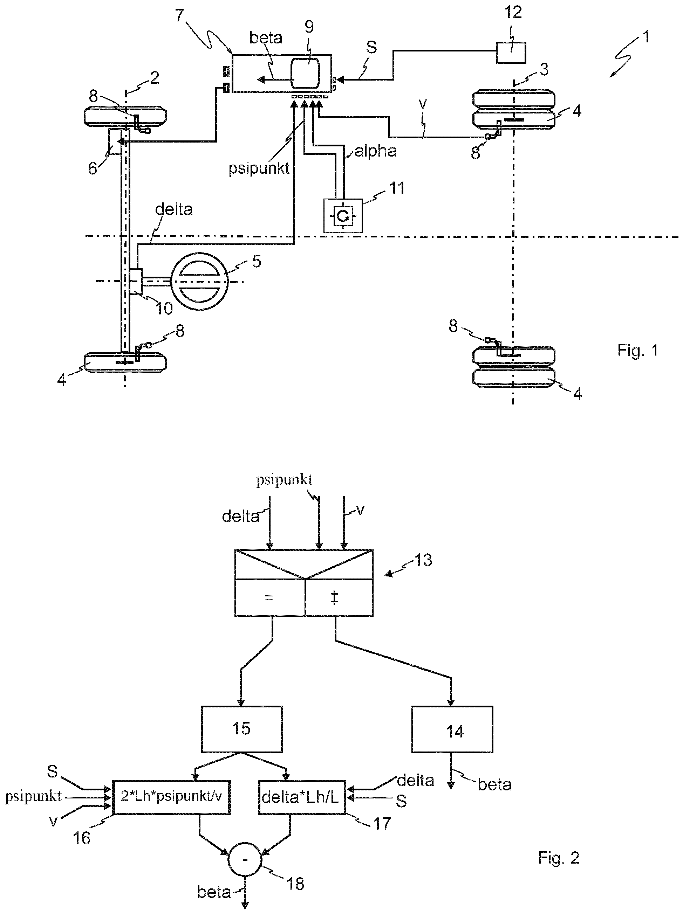

Fig. 1 zeigt eine schematische Ansicht eines Kraftwagens 1 mit einer Vorderachse 2 und einer Hinterachse 3, an denen jeweils Räder 4 angeordnet sind. Die Räder 4 der Vorderachse 2 sind lenkbar über ein Lenkrad 5. Jedes Rad 4 ist mit einer Radbremse 6 ausgestattet, welche von einem Fahrerassistenzsystem 7 individuell ansteuerbar ist. Dem Fahrerassistenzsystem 7 werden laufend Messwerte über dynamische Fahrzeugparameter zugeführt. Berücksichtigt wird vom Fahrerassistenzsystem 7 die Fahrzeuggeschwindigkeit v, welche aus Messwerten von Drehzahlsensoren 8 der Räder 4 ermittelt wird. Im gezeigten Ausführungsbeispiel ist an jedem Rad 4 jeweils ein Drehzahlsensor 8 angeordnet, welcher beispielsweise mit einem Polrad zusammenwirkt und ein elektrisches Signal mit Aussage über die Drehzahl erzeugt.

Das Fahrerassistenzsystem 7 bestimmt einen Schwimmwinkel beta des Kraftwagens 1 während der Kurvenfahrt, welcher als Maß für die Beurteilung der Fahrstabilität herangezogen wird. Entsprechend seiner aktiven und/oder passiven Arbeitsaufgabe legt das Fahrerassistenzsystem den aktuellen Schwimmwinkel beta der Bestimmung geeigneter Eingriffsmaßnahmen in die Fahrstabilität des Kraftwagens 1 zugrunde. Hierzu ist das Fahrerassistenzsystem zur Bestimmung von aktiven Lenk- und/oder Bremseingriffen unter Berücksichtigung des Schwimmwinkels beta ausgebildet. Vorteilhaft ist das Fahrerassistenzsystem 7 zur Detektion von Über- oder Untersteuertendenzen unter Berücksichtigung des Schwimmwinkels beta ausgebildet. Bei weiteren möglichen Arbeitsaufgaben ist das Fahrerassistenzsystem 7 zur Bestimmung von Trajektorien unter Berücksichtigung des Schwimmwinkels beta ausgebildet, beispielsweise Spurkontrolle.

Dem Fahrerassistenzsystem 7 wird zur Bestimmung 9 des aktuellen Schwimmwinkels beta als Eingangsgröße der aktuelle Lenkwinkel delta vorgegeben, welcher über die eingeschlagene Stellung der Räder 5 der Vorderachse 2 bestimmt ist. Der Lenkwinkel delta wird im gezeigten Ausführungsbeispiel über einen Lenkradsensor 10 erfasst und dem Fahrerassistenzsystem 7 zur Verfügung gestellt. Als weitere Eingangsgröße erfasst das Fahrerassistenzsystem 7 eine Kurvenfahrtbewegungsgröße des Kraftwagens 1 in Bezug auf dessen Schwerpunkt S. Die Kurvenfahrtbewegungsgröße kann die Giergeschwindigkeit psipunkt oder die Querbeschleunigung a des Kraftwagens 1 sein. Dem Fahrerassistenzsystem 7 ist ein Querbeschleunigungssensor 11 zugeordnet, dessen Messsignal Aussagen über Kurvenfahrtbewegungsgrößen des Kraftwagens 1 bereitstellt, insbesondere die Giergeschwindigkeit psipunkt und/oder die aktuelle Querbeschleunigung a.

Das Fahrerassistenzsystem 7 berücksichtigt als Eingangsgröße für die Bestimmung des Schwimmwinkels beta auch die Lage des Schwerpunkts S zwischen den Achsen 2, 3. Die Lage des Schwerpunkts S, welche unter anderem von der Beladung des Kraftwagens abhängig ist, wird durch eine Erfassungseinrichtung 12 bedarfsweise gemessen. Hierzu können beispielsweise die Messergebnisse von Achslastsensoren herangezogen werden und die Schwerpunktlage unter Anwendung entsprechender Algorithmen elektronisch bestimmt werden.

Die Bestimmung 9 des Schwimmwinkels beta ist schematisch in Fig.2 dargestellt.

Der Schwimmwinkel beta wird während stabiler Kurvenfahrten des Kraftwagens in einer nachstehend erläuterten Weise unter vereinfachenden Annahmen gemäß der Erfindung ermittelt. Dabei wird in einem ersten Schritt in einer Stabilitätsabfrage 13 geprüft und geklärt, ob eine stabile Kurvenfahrt vorliegt. Hierzu wird eine zeitliche Veränderung der Eingangsgrößen überwacht. Verändern sich entweder der Lenkwinkel delta, die Fahrzeuggeschwindigkeit v oder die erfasste Kurvenfahrtbewegungsgröße (Giergeschwindigkeit psipunkt oder Querbeschleunigung a) derart, dass der Bereich vorgegebener Stabilitätskriterien verlassen wird, so wird davon ausgegangen, dass keine stabile Kurvenfahrt gegeben ist. In diesem Fall wird der Schwimmwinkel beta durch Integration 14 der Differenz zwischen gemessener Giergeschwindigkeit psipunkt und einem theoretischen Wert der Giergeschwindigkeit bestimmt, welcher aus der Querbeschleunigung a hergeleitet wird.

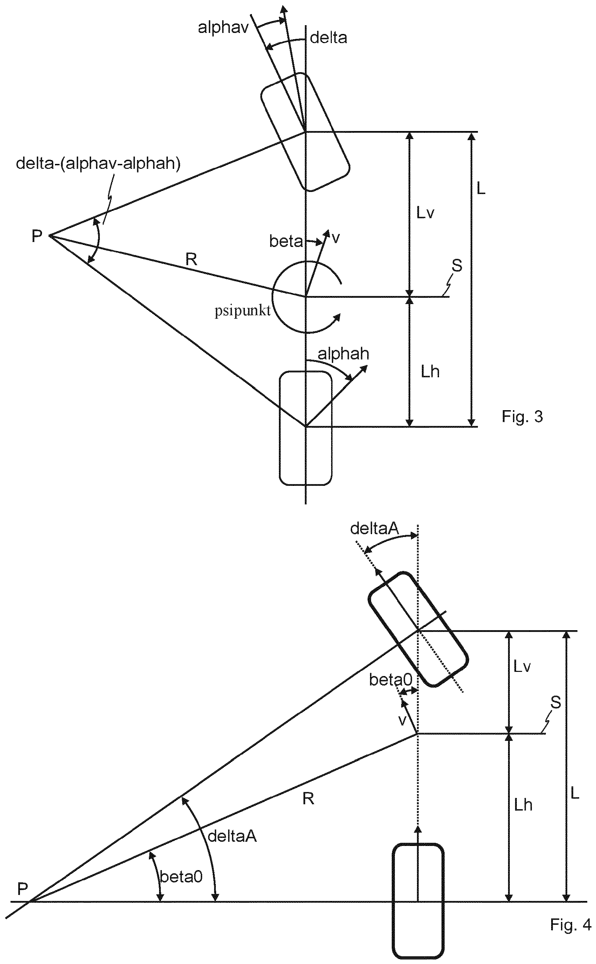

Bei stabilen Kurvenfahrten werden die erfassten Eingangsgrößen über ein mathematisches Fahrzeugmodell 15 mit den Annahmen des linearen Einspurmodells miteinander verknüpft. Die im Einspurmodell geltenden Winkelbeziehungen sind in Fig. 3 und Fig. 4 dargestellt. Fig. 3 zeigt eine Kurvenfahrt mit dem Kurvenradius R um den Momentanpol P, wobei das Vorderrad mit dem Lenkwinkel delta eingeschlagen ist. Der Kurvenradius ist dabei bezogen auf die Lage des Schwerpunkts S des Kraftwagens, welcher mit einer Hinterachsentfernung Lh von der Achse des Hinterrades entfernt liegt. Der Radstand L, das heißt der Abstand zwischen Vorderachse und Hinterachse, liegt konstruktiv fest. Der Kurvenradius R ist im Einspurmodell bestimmt als Quotient aus Fahrzeuggeschwindigkeit v und Giergeschwindigkeit psipunkt, welche jeweils am Schwerpunkt S wirken. Durch die Bewegungsrichtung des Kraftwagens im Schwerpunkt S und die Richtung der Fahrzeuglängsachse bei der Kurvenfahrt ist der Schwimmwinkel beta definiert.

Da während realer Fahrt stets Schlupf an den Rädern auftritt, bewegen sich die Räder jeweils mit Schräglaufwinkeln alphav, alphah. Die Schräglaufwinkel stehen in Wechselbeziehung mit dem letztlich zu bestimmenden Schwimmwinkel beta. Der Schräglaufwinkel alphah des Hinterrades ist nach dem Einspurmodell die Differenz zwischen dem Quotienten aus Hinterachsentfernung und Kurvenradius und dem Schwimmwinkel beta, gemäß folgender Gleichung:

$$alphah = Lh \ / \ (v/psipunkt) - beta \quad .$$

Schlupf tritt allerdings nicht unter den sogenannten Ackermann-Bedingungen auf. In dieser Situation, die Fig. 4 darstellt, ist das Vorderrad mit genau demjenigen Winkel angestellt, in der sich die gedanklich verlängerte Vorderachse und die gedanklich verlängerte Hinterachse im Momentanpol P schneiden. Dieser Lenkwinkel wird als Ackermannwinkel deltaA bezeichnet und entspricht dem Quotienten aus Radstand L und Kurvenradius R. Ebenfalls ohne Schlupfanteil ist der Schwimmwinkel unter Ackermannbedingungen, welcher als Ackermannschwimmwinkel beta0 bezeichnet wird.

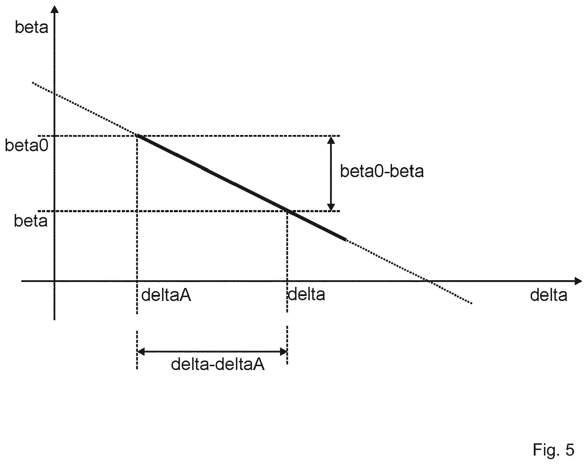

Gemäß der Erfindung kann die Bestimmung des Schwimmwinkels beta während stationärer Kurvenfahrten auch ohne Erfassung von schlupfbezogenen Größen erfolgen, wenn das mathematische Fahrzeugmodell annimmt, dass die Differenz zwischen dem Schwimmwinkel beta und dem Ackermannschwimmwinkel beta0 proportional zu der Differenz zwischen dem Ackermannwinkel deltaA und dem Lenkwinkel delta ist. Diese Beziehung ist in Fig. 5 grafisch dargestellt und entspricht der folgenden Proportionalität:

$$(beta-beta0) \sim (deltaA-delta)$$

Aus der Beziehung des gemessenen Lenkwinkels delta und des Ackermannwinkels deltaA wird über die Proportionalitätsbeziehung vom theoretisch bei schlupffreier Fahrt der gleichen Kurve vorliegenden Ackermannschwimmwinkel beta0 auf den tatsächlichen und vom Verfahren gemäß Fig. 2 gesuchten Schwimmwinkel beta geschlossen. Dabei macht sich die Erfindung den in Fig. 5 dargestellten Zusammenhang nach Grundsätzen des Strahlensatzes zunutze und nimmt an, dass die Differenz zwischen dem Schwimmwinkel beta und dem Ackermannschwimmwinkel beta0 bezogen auf den Ackermannschwimmwinkel gleich ist der Differenz zwischen dem Ackermannwinkel deltaA und dem Lenkwinkel delta bezogen auf den Ackermannwinkel deltaA. Das ergibt folgende Gleichung:

$$(beta-beta0)/beta0 = (deltaA-delta)/deltaA \quad .$$

Diese Annahme bezieht die als proportional angenommenen Differenzen auf die jeweiligen Werte unter Ackermannbedingungen, wobei bekanntlich kein Schlupf auftritt. Dabei gelten die im Einspurmodell definierten Beziehungen des Lenkwinkels und des Schwimmwinkels unter Ackermannbedingungen, das heißt des Ackermannwinkels und des Ackermannschwimmwinkels, so dass der gesuchte Schwimmwinkel bestimmt ist.

Für das Ausführungsbeispiel gemäß Fig. 2 mit Erfassung der Giergeschwindigkeit psipunkt ergibt sich die folgende Bestimmungsgleichung für den Schwimmwinkel:

$$beta = 2*Lh*psipunkt/v - delta*Lh/L \quad .$$

Es wird somit im Ausführungsbeispiel gemäß Fig. 2 ein erster Quotient 16 bestimmt aus dem Produkt zweifacher Hinterachsentfernung Lh und der Giergeschwindigkeit psipunkt gegenüber der Fahrzeuggeschwindigkeit v. Ein zweiter Quotient 17 wird gebildet aus dem Produkt von Lenkwinkel delta und Hinterachsentfernung Lh gegenüber dem Radstand L. Die Differenz 18 zwischen dem ersten Quotient 16 und dem zweiten Quotient 17 ist der gesuchte Schwimmwinkel beta während stationärer Kurvenfahrt.

In einem zweiten Ausführungsbeispiel wird als Kurvenfahrtbewegungsgröße anstelle der Giergeschwindigkeit psipunkt die Querbeschleunigung a ermittelt oder gemessen. Dabei wird der erste Quotient aus dem Produkt zweifacher Hinterachsentfernung Lh und der Querbeschleunigung a gegenüber dem Quadrat der Fahrzeuggeschwindigkeit v bestimmt. Der Schwimmwinkel beta ergibt sich dann nach der folgenden Gleichung:

$$beta = 2*Lh*a/(v**2) - delta*Lh/L \quad .$$

Bezugszeichenliste (Teil der Beschreibung)

1 Kraftwagen
2 Vorderachse
3 Hinterachse
4 Rad
5 Lenkrad
6 Radbremse
7 Fahrerassistenzsystem
8 Drehzahlsensor
9 Bestimmung
10 Lenkradsensor
11 Querbeschleunigungssensor
12 Erfassungseinrichtung
13 Stabilitätsabfrage
14 Integration
15 Mathematisches Fahrzeugmodell
16 Erster Quotient
17 Zweiter Quotient
18 Differenz

a         Querbeschleunigung
alpha     Schräglaufwinkel
alphah    Schräglaufwinkel des Hinterrades
alphav    Schräglaufwinkel des Vorderrades
beta      Schwimmwinkel
beta0     Ackermannschwimmwinkel
delta     Lenkwinkel
deltaA    Ackermannwinkel
L         Radstand
Lh        Hinterachsabstand
psipunkt  Giergeschwindigkeit
R         Kurvenradius
S         Schwerpunkt
v         Fahrzeuggeschwindigkeit

**Patentansprüche**

1. Verfahren zur Bestimmung eines Schwimmwinkels (beta) während der Kurvenfahrt eines Kraftwagens, wobei folgende Eingangsgrößen erfasst und über ein mathematisches Fahrzeugmodell (15) mit den Annahmen des linearen Einspurmodells miteinander verknüpft werden:

   - eine vorgegebene oder gemessene Lage des Schwerpunkts (S) des Kraftwagens (1) zwischen einer Vorderachse (2) und einer Hinterachse (3) des Kraftwagens (1),
   - die aktuelle Fahrzeuggeschwindigkeit (v) des Kraftwagens (1),
   - eine aktuelle Kurvenfahrtbewegungsgröße (psipunkt, a) des Kraftwagens,
   - der aktuelle Lenkwinkel (delta) an der Vorderachse,
   **dadurch gekennzeichnet, dass** im Fall einer stabilen Kurvenfahrt des Kraftwagens (1) der Schwimmwinkel (beta) unter der Annahme bestimmt wird, dass die Differenz zwischen dem Schwimmwinkel (beta) und dem Ackermannschwimmwinkel beta0 proportional zu der Differenz zwischen dem Ackermannwinkel (deltaA) und dem Lenkwinkel (delta) ist, wobei aus der Beziehung des gemessenen Lenkwinkels (delta) und des Ackermannwinkels (deltaA) über die Proportionalitätsbeziehung vom theoretisch bei schlupffreier Fahrt der gleichen Kurve vorliegenden Ackermannschwimmwinkel (beta0) auf den tatsächlichen Schwimmwinkel (beta) geschlossen wird, und
   der Schwimmwinkel (beta) als Differenz (18) eines ersten Quotienten (16) aus zweifacher Hinterachsentfernung (Lh) des Schwerpunkts (S) von der Hinterachse gegenüber dem Kurvenradius (R), welcher als Verhältnis der Fahrzeuggeschwindigkeit (v) zur Kurvenfahrtbewegungsgröße (psipunkt, a) berücksichtigt wird, sowie eines zweiten Quotienten (17) des Produkts von Lenkwinkel (delta) und Hinterachsentfernung (Lh) gegenüber dem Radstand (L) zwischen der Vorderachse (2) und der Hinterachse (3) bestimmt wird.

2. Verfahren nach Anspruch 1,
**dadurch gekennzeichnet, dass** als Kurvenfahrtbewegungsgröße die Giergeschwindigkeit (psipunkt) ermittelt oder gemessen wird.

3. Verfahren nach Anspruch 2,
**dadurch gekennzeichnet, dass** der erste Quotient (16) aus dem Produkt zweifacher Hinterachsentfernung (Lh) und der Giergeschwindigkeit (psipunkt) gegenüber der Fahrzeuggeschwindigkeit (v) bestimmt wird.

4. Verfahren nach Anspruch 1,
**dadurch gekennzeichnet, dass** als Kurvenfahrtbewegungsgröße die Querbeschleunigung (a) ermittelt oder gemessen wird.

5. Verfahren nach einem der vorhergehenden Ansprüche,
**dadurch gekennzeichnet, dass** in Fällen, dass keine stabile Kurvenfahrt gegeben ist, der Schwimmwinkel (beta) bestimmt wird durch Integration (14) der Differenz zwischen gemessener Giergeschwindigkeit (psipunkt) und einem Wert der Giergeschwindigkeit, welcher aus der Querbeschleunigung (a) hergeleitet wird.

6. Fahrerassistenzsystem für Kraftwagen, welches zur Durchführung des Verfahrens zur Bestimmung eines Schwimmwinkels (beta) nach einem der vorhergehenden Ansprüche ausgebildet ist, wobei dem Fahrerassistenzsystem ein mathematisches Modell mit den Annahmen des linearen Einspurmodells zur Verknüpfung folgender Eingangsgrößen vorgegeben ist:

   - eine vorgegebene oder gemessene Lage des Schwerpunkts (S) des Kraftwagens zwischen einer Vorderachse und einer Hinterachse des Kraftwagens,
   - die aktuelle Fahrzeuggeschwindigkeit (v) des Kraftwagens (1),
   - eine aktuelle Kurvenfahrtbewegungsgröße (psipunkt, a) des Kraftwagens (1),
   - der aktuelle Lenkwinkel (delta) an der Vorderachse,
   **dadurch gekennzeichnet, dass** das mathematische Fahrzeugmodell für die Bestimmung des Schwimmwinkels (beta) bei stabilen Kurvenfahrten des Kraftwagens die Annahme umfasst, dass die Differenz zwischen dem Schwimmwinkel (beta) und dem Ackermannschwimmwinkel (beta0) proportional zu der Differenz zwischen dem Ackermannwinkel (deltaA) und dem Lenkwinkel (delta) ist, wobei das Fahrerassistenzsystem dazu ausgebildet ist, aus der Beziehung des gemessenen Lenkwinkels (delta) und des Ackermannwinkels (deltaA) über die Proportionalitätsbeziehung vom theoretisch bei schlupffreier Fahrt der gleichen Kurve vorliegenden Ackermannschwimmwinkel (beta0) auf den tatsächlichen Schwimmwinkel (beta) zu schließen;
   wobei der Schwimmwinkel (beta) als Differenz (18) eines ersten Quotienten (16) aus zweifacher Hinterachsentfernung (Lh) des Schwerpunkts (S) von der Hinterachse gegenüber dem Kurvenradius (R), welcher als Verhältnis der Fahrzeuggeschwindigkeit (v) zur Kurvenfahrtbewegungsgröße (psipunkt, a) berücksichtigt wird, sowie eines zweiten Quotienten (17) des Produkts von Lenkwinkel (delta) und Hinterachsentfernung (Lh) gegenüber dem Radstand (L) zwischen der Vorderachse (2) und der Hinterachse (3) bestimmbar ist.

7. Fahrerassistenzsystem nach Anspruch 6,
**dadurch gekennzeichnet, dass** das Fahrerassistenzsystem zur Bestimmung von aktiven Lenk- und/oder Bremseingriffen unter Berücksichtigung des Schwimmwinkels (beta) ausgebildet ist.

8. Fahrerassistenzsystem nach Anspruch 6 oder 7,
**dadurch gekennzeichnet, dass** das Fahrerassistenzsystem zur Bestimmung von Trajektorien unter Berücksichtigung des Schwimmwinkels (beta) ausgebildet ist.

9. Fahrerassistenzsystem nach Anspruch 6, 7 oder 8,
**dadurch gekennzeichnet, dass** das Fahrerassistenzsystem zur Detektion von Über- oder Untersteuertendenzen unter Berücksichtigung des Schwimmwinkels (beta) ausgebildet ist.

10. Kraftwagen mit einem Fahrerassistenzsystem gemäß einem der Ansprüche 6 bis 9.

**Claims**

1. A method for ascertaining a side slip angle (beta) during a cornering maneuver of a motor vehicle, with the following input variables being recorded and linked to one another via a mathematical vehicle model (15) having the assumptions of the linear single-track model:

   - a predetermined or measured position of the center of gravity (S) of the motor vehicle (1) between a front axle (2) and a rear axle (3) of the motor vehicle (1),
   - the current vehicle speed (v) of the motor vehicle (1),
   - a current cornering movement variable (psipunkt, a) of the motor vehicle,
   - the current steering angle (delta) on the front axle,
   **characterized in that,** in the case of a stable cornering maneuver of the motor vehicle (1), the side slip angle (beta) is ascertained on the assumption that the difference between the side slip angle (beta) and the Ackermann side slip angle beta0 is proportional to the difference between the Ackermann angle (deltaA) and the steering angle (delta), the actual side slip angle (beta) being inferred from the relationship between the measured steering angle (delta) and the Ackermann angle (deltaA) via the proportionality relationship of the Ackermann side slip angle (beta0) theoretically present during slip-free travel on the same curve, and
   the side slip angle (beta) being ascertained as the difference (18) between a first quotient (16) of twice the rear axle distance (Lh) of the center of gravity (S) from the rear axle relative to the curve radius (R), which is taken into account as the ratio of the vehicle speed (v) to the cornering movement variable (psipunkt, a), and a second quotient (17) of the product of the steering angle (delta) and the rear axle distance (Lh) relative to the wheelbase (L) between the front axle (2) and the rear axle (3).

2. The method according to claim 1,
   **characterized in that** the yaw rate (psipunkt) is detected or measured as the cornering movement variable.

3. The method according to claim 2,
   **characterized in that** the first quotient (16) is ascertained from the product of twice the rear axle distance (Lh) and the yaw rate (psipunkt) relative to the vehicle speed (v).

4. The method according to claim 1,
   **characterized in that** the lateral acceleration (a) is detected or measured as the cornering movement variable.

5. The method according to any of the preceding claims,
   **characterized in that,** in cases where there is no stable cornering maneuver, the side slip angle (beta) is ascertained by integrating (14) the difference between the measured yaw rate (psipunkt) and a value of the yaw rate which is derived from the lateral acceleration (a).

6. A driver assistance system for motor vehicles, which is designed to carry out the method for ascertaining a side slip angle (beta) according to any of the preceding claims, the driver assistance system being provided with a mathematical model having the assumptions of the linear single-track model for linking the following input variables:

   - a predetermined or measured position of the center of gravity (S) of the motor vehicle between a front axle and a rear axle of the motor vehicle,
   - the current vehicle speed (v) of the motor vehicle (1),
   - a current cornering movement variable (psipunkt, a) of the motor vehicle (1),
   - the current steering angle (delta) on the front axle,
   **characterized in that** the mathematical vehicle model for ascertaining the side slip angle (beta) during stable cornering maneuvers of the motor vehicle includes the assumption that the difference between the side slip angle (beta) and the Ackermann side slip angle (beta0) is proportional to the difference between the Ackermann angle (deltaA) and the steering angle (delta), the driver assistance system being designed to infer the actual side slip angle (beta) from the relationship between the measured steering angle (delta) and the Ackermann angle (deltaA) via the proportionality relationship of the Ackermann side slip angle (beta0) theoretically present during slip-free travel on the same curve;
   the side slip angle (beta) being ascertainable as the difference (18) between a first quotient (16) of twice the rear axle distance (Lh) of the center of gravity (S) from the rear axle relative to the curve radius (R), which is taken into account as the ratio of the vehicle speed (v) to the cornering movement variable (psipunkt, a), and a second quotient (17) of the product of the steering angle (delta) and the rear axle distance (Lh) relative to the wheelbase (L) between the front axle (2) and the rear axle (3).

7. The driver assistance system according to claim 6,
   **characterized in that** the driver assistance system is designed to ascertain active steering and/or braking interventions taking into account the side slip angle (beta).

8. The driver assistance system according to either claim 6 or claim 7,
   **characterized in that** the driver assistance system is designed to ascertain trajectories taking into account the side slip angle (beta).

9. The driver assistance system according to claim 6, claim 7 or claim 8,
   **characterized in that** the driver assistance system is designed to detect oversteer or understeer tendencies, taking into account the side slip angle (beta).

10. A motor vehicle having a driver assistance system according to any of claims 6 to 9.


**Revendications**

1. Procédé destiné à déterminer un angle de dérive (bêta) pendant le virage d'un véhicule automobile, les grandeurs d'entrée suivantes étant détectées et reliées entre elles par l'intermédiaire d'un modèle mathématique (15) de véhicule avec les hypothèses du modèle linéaire à une voie :

   - une position spécifiée ou mesurée du centre de gravité (S) du véhicule automobile (1) entre un essieu avant (2) et un essieu arrière (3) du véhicule automobile (1),
   - la vitesse actuelle (v) de véhicule du véhicule automobile (1),
   - une grandeur actuelle de mouvement en virage (point psi, a) du véhicule automobile,
   - l'angle de braquage (delta) actuel au niveau de l'essieu avant,
   **caractérisé en ce que,** dans le cas d'un virage stable du véhicule automobile (1), l'angle de dérive (bêta) est déterminé avec l'hypothèse que la différence entre l'angle de dérivé (bêta) et l'angle de dérive Ackermann (bêta0) est proportionnelle à la différence entre l'angle Ackermann (deltaA) et l'angle de braquage (delta), la relation entre l'angle de braquage (delta) mesuré et l'angle Ackermann (deltaA) permettant de déduire l'angle de dérive (bêta) réel par l'intermédiaire de la relation de proportionnalité de l'angle de dérive Ackermann (bêta0) théoriquement présent lors d'un déplacement sans patinage de la même courbe et
   l'angle de dérive (bêta) est déterminé comme la différence (18) d'un premier quotient (16) du double de la distance (Lh) de l'essieu arrière du centre de gravité (S) de l'essieu arrière au rayon de courbure (R), qui est pris en compte comme le rapport de la vitesse (v) de véhicule à la grandeur de mouvement en virage (point psi, a), et d'un deuxième quotient (17) du produit de l'angle de braquage (delta) et de la distance (Lh) de l'essieu arrière à l'empattement (L) entre l'essieu avant (2) et l'essieu arrière (3).

2. Procédé selon la revendication 1,
   **caractérisé en ce que** la vitesse de lacet (point psi) est déterminée ou mesurée comme grandeur de mouvement en virage.

3. Procédé selon la revendication 2,
   **caractérisé en ce que** le premier quotient (16) est déterminé à partir du produit du double de la distance (Lh) de l'essieu arrière et de la vitesse de lacet (point psi) par rapport à la vitesse (v) de véhicule.

4. Procédé selon la revendication 1,
   **caractérisé en ce que** l'accélération transversale (a) est déterminée ou mesurée comme grandeur de mouvement en virage.

5. Procédé selon l'une des revendications précédentes,
   **caractérisé en ce que,** dans les cas où il n'y a pas de virage stable, l'angle de dérive (bêta) est déterminé par intégration (14) de la différence entre la vitesse de lacet (point psi) mesurée et une valeur de la vitesse de lacet qui est déduite de l'accélération transversale (a).

6. Système d'assistance au conducteur pour véhicules automobiles, qui est conçu pour la mise en oeuvre du procédé destiné à déterminer un angle de dérive (bêta) selon l'une des revendications précédentes, un modèle mathématique avec les hypothèses du modèle linéaire à une voie afin de relier les grandeurs d'entrée suivantes étant spécifié au système d'assistance au conducteur :

- une position spécifiée ou mesurée du centre de gravité (S) du véhicule automobile entre un essieu avant et un essieu arrière du véhicule automobile,
- la vitesse actuelle (v) de véhicule du véhicule automobile (1),
- une grandeur actuelle du mouvement en virage (point psi, a) du véhicule automobile (1),
- l'angle de braquage (delta) actuel au niveau de l'essieu avant,

**caractérisé en ce que** le modèle mathématique de véhicule pour la détermination de l'angle de dérive (bêta) dans le cas de virages stables du véhicule automobile comprend l'hypothèse que la différence entre l'angle de dérive (bêta) et l'angle de dérive Ackermann (bêta0) est proportionnelle à la différence entre l'angle Ackermann (deltaA) et l'angle de braquage (delta), le système d'assistance au conducteur étant conçu pour déduire l'angle de dérive (bêta) réel à partir de la relation entre l'angle de braquage (delta) mesuré et l'angle Ackermann (deltaA) par l'intermédiaire de la relation de proportionnalité de l'angle de dérive Ackermann (bêta0) théoriquement présent lors d'un déplacement sans patinage de la même courbe ;

l'angle de dérive (bêta) pouvant être déterminé comme la différence (18) d'un premier quotient (16) du double de la distance (Lh) de l'essieu arrière du centre de gravité (S) de l'essieu arrière au rayon de courbure (R), qui est pris en compte comme rapport de la vitesse (v) de véhicule à la grandeur de mouvement en virage (point psi, a), et d'un deuxième quotient (17) du produit de l'angle de braquage (delta) et de la distance (Lh) de l'essieu arrière à l'empattement (L) entre l'essieu avant (2) et l'essieu arrière (3).

7. Système d'assistance au conducteur selon la revendication 6,
**caractérisé en ce que** le système d'assistance au conducteur est conçu afin de déterminer des interventions actives de virage et/ou de freinage compte tenu de l'angle de dérive (bêta).

8. Système d'assistance au conducteur selon la revendication 6 ou 7,
**caractérisé en ce que** le système d'assistance au conducteur est conçu pour déterminer des trajectoires compte tenu de l'angle de dérive (bêta).

9. Système d'assistance au conducteur selon la revendication 6, 7 ou 8,
**caractérisé en ce que** le système d'assistance au conducteur est conçu afin de détecter des tendances au survirage ou au sous-virage compte tenu de l'angle de dérive (bêta).

10. Véhicule automobile comportant un système d'assistance au conducteur selon l'une des revendications 6 à 9.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006009682 A1
- DE 102010050278 A1
- EP 0970876 A2